# EUROPÄISCHE PATENTSCHRIFT

(11) **EP 1 019 452 B1**
(45) Veröffentlichungstag und Bekanntmachung des Hinweises auf die Patenterteilung: **20.04.2005**
(21) Anmeldenummer: 98951412.0
(22) Anmeldetag: 16.09.1998
(51) Int. Cl.: C08L 69/00, C08L 51/04, C08L 55/02

(54) **POLYCARBONAT-ABS-FORMMASSEN**
POLYCARBONATE-ABS MOULDING MATERIALS
MATIERES MOULABLES EN POLYCARBONATE-ABS

(30) Priorität: 29.09.1997 DE 19742868
(43) Veröffentlichungstag der Anmeldung: 19.07.2000
(73) Patentinhaber: Bayer MaterialScience AG, 51368 Leverkusen (DE)
(72) Erfinder: ECKEL, Thomas, D-41540 Dormagen (DE); WITTMANN, Dieter, D-51375 Leverkusen (DE); OSTAREK, Ralph, Longmeadow, MA 01106 (US); WEIDER, Richard, Longmeadow, MA 01106 (US); MICHELS, Gisbert, D-51061 Köln (DE)
(86) Internationale Anmeldenummer: PCT/EP1998/005884
(87) Internationale Veröffentlichungsnummer: WO 1999/016828

(56) Entgegenhaltungen:
- EP-A- 0 436 186
- EP-A- 0 444 704
- EP-A- 0 603 664
- EP-A- 0 610 800
- EP-A- 0 810 242

## Beschreibung

Die vorliegende Erfindung betrifft Polycarbonat-ABS-Formmassen, die ein ausgezeichnetes mechanisches Eigenschaftsniveau, insbesondere ein ausgezeichnetes Spannungsrißverhalten, eine hohe Kerbschlagzähigkeit und eine hohe Fließnahtfestigkeit aufweisen.

Polycarbonat-ABS-Formmassen sind hinlänglich bekannt (z.B. EP-A 363 608, EP-A 345 522, EP-A 640 655).

Ein spezielles Einsatzgebiet dieser Formmassen ist die Herstellung von Formkörpern mit sehr guter Schlagzähigkeit. Um bei diesen Formmassen auch kautschukspezifische Eigenschaften zu erhalten bzw. zu erreichen, werden bevorzugt spezielle, durch Emulsionspolymerisation hergestellte Pfropfkautschuke eingesetzt. Für die Herstellung von Formkörpern mit erhöhter Schlag- und Elastizitätsbeanspruchung reicht das Werteniveau der bekannten Formmassen bzw. der daraus hergestellten Formkörper nicht immer aus. Eine Erhöhung des Anteils dieser durch Emulsionspolymerisation hergestellter Pfropfkautschuke führt dann häufig zu Formmassen mit signifikanten Eigenschaftsnachteilen (Wärmeformbeständigkeit, E-Modul).

Aufgabe der vorliegenden Erfindung ist es daher, Polycarbonat-ABS-Formmassen bereitzustellen, die ausgezeichnete mechanische Eigenschaften wie eine herausragende Kerbschlagzähigkeit, eine ausgezeichnete Fließnahtfestigkeit, einen hohen E-Modul sowie sehr hohe Spannungsrißbeständigkeit aufweisen.

Es wurde nun überraschenderweise gefunden, daß durch den Einsatz von speziellen ABS-Polymerisaten Polycarbonat-ABS-Formmassen erhalten werden, die zu Formkörpern mit einem sehr guten mechanischen Eigenschaftsniveau, insbesondere mit einer ausgezeichneten Kerbschlagzähigkeit, einer hohen Fließnahtfestigkeit, einen hohen E-Modul und einer herausragenden Langzeitbeständigkeit verarbeitet werden können.

Gegenstand der vorliegenden Erfindung sind daher thermoplastische Formmassen enthaltend
A. 1 bis 99, vorzugsweise 15 bis 80, besonders bevorzugt 30 bis 70 Gew.-Teile eines aromatischen Polycarbonats oder Polyestercarbonats
   und
B. 1 bis 99, vorzugsweise 15 bis 80, besonders bevorzugt 30 bis 70 Gew.-Teile, mindestens eines Pfropfpolymerisats mit einem Kautschukgehalt von 20 bis 50, vorzugsweise 22,5 bis 45 und besonders bevorzugt 25 bis 40 Gew.-%, bezogen auf das Pfropfpolymerisat, und einem mittleren Teilchendurchmesser der Kautschukphase von 80 bis 600 nm, vorzugsweise von 150 bis 400 nm und besonders bevorzugt von 200 bis 350 nm, erhältlich durch Lösungspolymeriation und
wenigstens eine organische Phosphorverbindung der Formel (III) 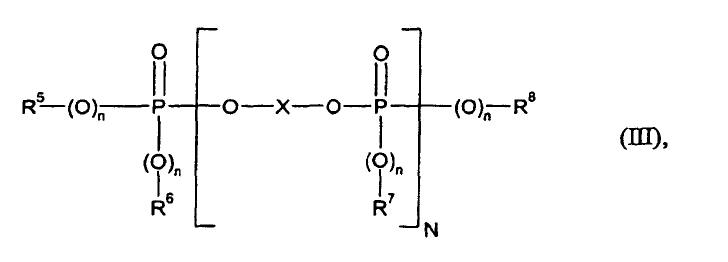 in welcher
- R⁵, R⁶, R⁷, R⁸: unabhängig voneinander für jeweils gegebenenfalls halogeniertes C₁-C₈-Alkyl, C₅-C₆-Cycloalkyl, C₆-C₁₀-Aryl oder C₇-C₁₂-Aralkyl stehen,
- X: für einen ein- oder mehrkernigen aromatischen Rest mit 6 bis 30 C-Atomen steht,
- n: für 0 oder 1 steht und
- N: für Werte von 0 bis 30 steht,
wobei die Summe aller Komponenten der erfindungsgemäßen Formmassen 100 Gew.-Teile ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 007 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechem, beispielsweise Monophenolen und gegebenenfalls unter Verwendung von trifunktionellen oder mehr als trifunktionellen Verzweigern, beispielsweise Triphenolen oder Tetraphenolen.

Erfindungsgemäß geeignete aromatische Polycarbonate sind insbesondere solche auf Basis der Diphenole der Formel (I) 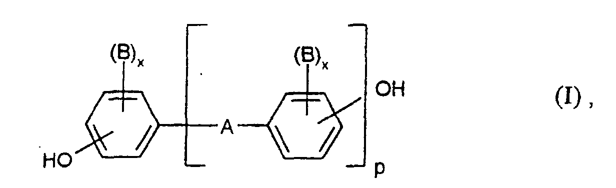 worin
- A: eine Einfachbindung, C₁-C₅-Alkylen, C₂-C₅-Alkyliden, C₅-C₆-Cycloalkyliden, -S-, -SO₂-, -O-, -CO- oder C₆-C₁₂-Arylen bedeutet, der gegebenenfalls mit weiteren, Heteroatome enthaltenden aromatischen Ringen kondensiert sein kann,
- B: unabhängig voneinander, Halogen, C₁-C₈-Alkyl, C₆-C₁₀-Aryl, bevorzugt Chlor, Brom, Phenyl, C₇-C₁₂-Aralkyl, beispielsweise Benzyl, bedeutet,
- x: unabhängig voneinander, jeweils 0, 1 oder 2 und
- p: 1 oder 0 bedeuten,
oder alkylsubstituierte Dihydroxyphenylcycloalkane der Formel (II), 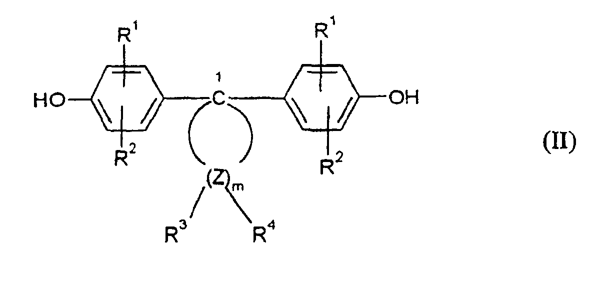 worin
- R¹ und R²,: unabhängig voneinander, Wasserstoff, Halogen, bevorzugt Chlor oder Brom, C₁-C₈-Alkyl, bevorzugt C₁-C₄-Alkyl, beispielsweise Methyl, Ethyl, C₅-C₆-Cycloalkyl, C₆-C₁₀-Aryl, bevorzugt Phenyl, oder C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴,: für jedes Z individuell wählbar, unabhängig voneinander, Wasserstoff oder C₁-C₆-Alkyl, vorzugsweise Wasserstoff, Methyl oder Ethyl
und
- Z: Kohlenstoff bedeutet, mit der Maßgabe, daß an mindestens einem Atom Z R³ und R⁴ gleichzeitig Alkyl, vorzugsweise Methyl, bedeuten.

Bevorzugte Diphenole sind Hydrochinon, Resorcin, Dihydroxydiphenyl, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-dilisopropyl-benzole sowie deren kernbromierte und/oder kemchlorierte Derivate.

Besonders bevorzugte Diphenole sind Diphenylphenol, Bisphenol-A, 2,4-Bis-(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-% und 10 mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an ≥ drei-funktionellen Verbindungen, beispielsweise solchen mit ≥ drei phenolischen Gruppen.

Geeignet sind sowohl Homopolycarbonate als auch Copolycarbonate. Zur Herstellung erfindungsgemäßer Copolycarbonate als Komponente A) können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol-A-Homopolycarbonaten, die Copolycarbonate von Bisphenol-A mit bis zu 15 mol-%, bezogen auf die Molsummen an Diphenolen, anderer als bevorzugt oder besonders bevorzugt genannten Diphenole, insbesondere von 2,2-Bis-(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis von 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mole Diphenole, und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (s. dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-4,4'-Benzophenon-tetracarbonsäuretetrachlorid, 1,4,5,8-Naphthalintetracarbonsäuretetrachlorid oder Pyromellithsäuretetrachlorid, in Mengen von 0,01 bis 1 mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polyestercarbonate liegt im Bereich 1,18 bis 1,4, vorzugsweise 1,22 bis 1,3 (gemessen an Lösungen von 0,5 g Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Als Komponente B werden Pfropfpolymerisate vom ABS-Typ eingesetzt, die durch Lösungspolymerisation erhalten werden.

Vorzugsweise wird das Pfropfpolymerisat gemäß Komponente B aus einem Monomerengemisch aus
B.1 90 bis 20 Gew.-Teilen aromatischer Monoalkenylverbindungen,
B.2 0 bis 50 Gew.-Teilen ethylenisch ungesättigter Nitrile,
B.3 0 bis 30 Gew.-Teilen weiterer, copolymerisierbarer Verbindungen,
in Gegenwart von
15 bis 50 Gew.-Teilen, pro 100 Gew.-Teile Monomeren B.1 bis B.3 eines löslichen, gelfreien Butadienpolymerisats oder Butadien/Styrol-Copolymerisats und in Gegenwart von
50 bis 200 Gew.-Teilen eines Lösungsmittels, pro 100 Gew.-Teile der Monomeren B.1 bis B.3 radikalisch polymerisiert,
wobei das Lösungsmittel ein aliphatischer(s) (C₁-C₈) oder cycloaliphatischer(s) (C₅-C₆) Alkohol, Keton, Ether, Ester, Nitril (L 1) oder ein Gemisch von (L 1) mit einem aliphatischen, cycloaliphatischen oder aromatischen Kohlenwasserstoff (L 2) im Gewichtsverhältnis L 1:L 2 von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so daß das Pfropfpolymerisat 20 bis 50 Gew.-% Butadienpolymerisat enthält.

Vorzugsweise beträgt der Gesamtkautschukgehalt des Pfropfpolymerisats 22,5 bis 45, besonders bevorzugt 25 bis 40 Gew.-% und ganz besonders bevorzugt 10 bis 20 Gew.-%.

Die Herstellung der Komponente B erfolgt durch Lösungspolymerisation unter Verwendung von mindestens einem Lösungsmittel, ausgewählt aus aliphatischem (C₁-C₈) oder cycloaliphatischen C₅-C₆-Alkoholen, Ketonen, Ethern, Estern, Nitrilen oder einem Gemisch aus mindestens einem der genannten Lösungsmittel mit einem aliphatischen oder cycloaliphatischen C₄-C₁₀-Kohlenwasserstoff und/oder aromatischen Kohlenwasserstoff unter speziellen Randbedingungen.

Vorzugsweise beträgt dabei der Polymerisatgehalt der Gesamtmischung 30 bis 60 Gew.-%, insbesondere 35 bis 50 Gew.-%, der Gesamtgehalt an Lösungsmittel 25 bis 60 Gew.-% und der Rest auf jeweils 100 % nicht umgesetzte Monomere.

Bei der vorzugsweisen Herstellung der Komponente B gelingt es bei Einsatz der Lösungsmittel oder -Gemische aus der Gruppe (L 1) und gegebenenfalls der Gruppe (L 2) in den angegebenen Gewichtsverhältnissen 1:0 bis 3:7, trotz hoher Kautschukgehalte eine Phaseninversion bei ausreichenden Umsätzen schnell zu durchlaufen, so daß eine feindisperse Phase aus Pfropfkautschuk entsteht.

Die Herstellung der Komponente B kann diskontinuierlich, halbkontinuierlich und kontinuierlich durchgeführt werden.

Bei der kontinuierlichen Ausführungsform kann man vorteilhaft die Lösung der Monomeren und des Kautschuks in den Lösungsmitteln in einen kontinuierlich beschickten, durchmischten und gerührten Tankreaktor bei einem stationären, nach der Phaseninversion liegenden Monomerumsatz in erster Stufe von über 10 Gew.-%, bezogen auf die Summe der Monomeren, polymerisieren und die radikalisch ausgelöste Polymerisation in mindestens einer weiteren Stufe bis zu einem Monomerenumsatz, bezogen auf die Summe der Monomeren von 30 bis 70 Gew.-% unter Durchmischen in einem oder mehreren weiter kontinuierlich betriebenen Rührkessel(n) in Kaskade oder in einem durchmischenden Pfropfströmungsreaktor und/oder einer Kombination beider Reaktortypen fortführen, Restmonomere und Lösungsmittel nach herkömmlichen Techniken (z.B. auf Wärmeaustauschverdampfer, Entspannungsverdampfer, Strangverdampfer, Dünnfilm- oder Dünnschichtverdampfer, Schneckenverdampfer) entfernen, und in den Prozeß zurückführen. Vorteilhaft kann es auch sein, die kontinuierliche Polymerisation in drei Stufen durchzuführen, wobei die erste Stufe bei einem stationären, vor der Phaseninversion liegenden Monomerumsatz unter 10 Gew.-% und die weiteren Stufen bei den oben beschriebenen Umsätzen betrieben werden.

Die diskontinuierliche oder halbkontinuierliche Polymerisation kann in einem oder mehreren hintereinander geschalteten gefüllten oder teilgefüllten Rührkessel unter Vorlegen oder Durchmischen der Monomere, des Kautschuks und der Lösungsmittel und Polymerisation bis zum angegebenen Monomerumsatz von 30 bis 70 Gew.-% durchgeführt werden.

Zur besseren Durchmischung und Zerteilung des eingespeisten Kautschuks kann der Polymersirup sowohl bei kontinuierlicher als auch bei diskontinuierlicher Fahrweise im Kreis über durchmischende und scherende Organe gepumpt werden. Solche "Loopoperationen" sind Stand der Technik und können bei der Einstellung der Teilchengröße des Kautschukes hilfreich sein. Vorteilhafter ist jedoch die Anordnung von Scherorganen zwischen zwei separaten Reaktoren, um Rückvermischung, die zu einer Verbreiterung der Teilchengrößenverteilung führt, zu vermeiden.

Die mittlere Verweilzeit beträgt 1 bis 10 Stunden. Die Polymerisation wird vorteilhaft bei 60 bis 120°C, vorzugsweise am Siedepunkt des Lösungsmittel/Polymer-Gemisches durchgeführt. Es ist vorteilhaft, die Polymerisation bei Normaldruck auszuführen. Es ist aber auch möglich, die Polymerisation bei geringem Überdruck bis zu 6 bar durchzuführen.

Die Zähigkeiten der gerührten oder transportierten Medien bewegen sich im Bereich von maximal 150 Pa·s.

Das Pfropfpolymerisat kann in bekannter Weise durch Fällen in Lösungsmittel, durch Strippen mit Wasser und/oder Wasserdampf oder durch Eindampfen bis zur Polymerschmelze z.B. auf Entspannungsverdampfern, Strangverdampfern, Wendelrohrverdampfem, Dünnfilmverdampfern, gewissen Dünnschichtverdampfern, Fallfilmverdampfern, Schneckenverdampfern, isoliert werden.

Man kann auch in gerührten Mehrphasenverdampfern mit Knet- und Abstreifvorrichtungen Lösungsmittel und Restmonomere entfernen. Die Mitverwendung von Treib- und Schleppmitteln, z.B. Wasserdampf, ist dabei möglich, wobei trotz der hohen Lösemittelmengen auch ohne Verwendung solcher Schleppmittel ein sehr niedriger Restmonomerengehalt mit einfachen Eindampfmethoden erreicht werden kann.

Lösungsmittel der Gruppe (L 1) sind Alkohole wie Methanol, Ethanol, Propanol, Isopropanol, Butanol, Isobutanol, tert.-Butanol, Amylalkohol, Isoamylalkohol, Isooctanol, Cyclohexanol, Ketone wie Aceton, Methyl-ethylketon, Methylisopropylketon, Cyclopentanon, Cyclohexanon; Ether wie Tetrahydrofuran, Dioxan, Ethylenglykoldimethyl, -diethyl, -dipropyl, -diisopropylester; Ester wie Ethylacetat, Propylacetat, Butylacetat oder Nitrile wie Acetonitril, Propionitril, Butyronitril. Bevorzugt wird Methyl-ethylketon und Aceton eingesetzt.

Lösungsmittel der Gruppe (L 2) sind aliphatische Kohlenwasserstoffe wie Butan, Pentan, Hexan, Heptan, Octan bzw. deren Iso-Derivate, cycloaliphatische Kohlenwasserstoffe wie Cyclopentan, Cyclohexan, Alkylcyclopentan, Alkylcyclohexan, aromatische Kohlenwasserstoffe wie Benzol, Toluol, Xylole, Ethylbenzol. Bevorzugt wird Toluol und Ethylbenzol eingesetzt.

Besonders bevorzugt sind Gemische aus Aceton und Ethylbenzol sowie aus Aceton und Toluol.

Man kann auch nur Lösungsmittel aus der Gruppe (L 1) verwenden. Bevorzugt ist dann Methyl-ethylketon.

Zur Einstellung der Molmassen können übliche Molmassenregler wie Mercaptane und Olefine, z.B. tert.-Dodecylmercaptan, n-Dodecylmercapten, Cyclohexan, Terpinolen, dimeres α-Methylstyrol u. a. in Mengen von 0,05 bis 1,0 Gew.-%, bezogen auf copolymerisierende Monomere, eingesetzt werden.

Geeignete Initiatoren für die radikalische Polymerisation sind pfropfaktive, in Radikale zerfallende Peroxide wie Peroxycarbonate, Peroxydicarbonate, Diacylperoxide, Perketale oder Dialkylperoxide und/oder Azo-Verbindungen oder Mischungen hieraus. Beispiele sind Azodiisobuttersäuredinitril, Azoisobuttersäurealkylester, tert.-Butyl-perpivalat, -peroctoat, -perbenzoat. Diese Initiatoren werden in Mengen von 0,01 bis 1 Gew.-%, bezogen auf die Monomere B.1 bis B.3, verwendet.

Während der Polymerisation oder vor der Aufarbeitung können übliche Zusatzmittel wie Farbstoffe, Antioxidantien, Gleitmittel, Stabilisatoren, die dem Fachmann bekannt sind, zugesetzt werden.

Für die Herstellung der Komponente B geeignete Kautschuke sind vorzugsweise lösliche, gelfreie Butadien-Polymerisate wie z.B. Polybutadiene, sowie Styrolbutadien-Copolymere in statistischer und/oder Block-Form, mit hohem 1,2-Vinyl-Anteil von 2 bis 40 %, bevorzugt von 8 bis 25 %, bezogen auf die Doppelbindungen, mit Molmassen von 50.000 bis 500.000, einschließlich verzweigter und sternförmiger Polymere mit Gelgehalten < 1 000 ppm.

Aromatische Monoalkenyl-Verbindungen B.1 sind bevorzugt Styrol, α-Methylstyrol, kernsubstituierte Alkylstyrole, kernsubstituierte Chlorstyrole.

Als ethylenisch ungesättigte Nitrile B.2 werden bevorzugt Acrylnitril oder Methacrylnitril eingesetzt.

Copolymerisierbare Verbindungen B.3 sind z.B. Acrylester wie Methyl(meth)acrylat, Ethyl(meth)acrylat, tert.-Butyl(meth)acrylat, Ester der Fumat-, Itaconsäure, Maleinderivate wie Maleinsäureanhydrid, Maleinsäureester, N-substituierte Maleinimide wie N-Cyclohexyl- oder N-Phenyl-Maleinimid, N-Alkyl-Phenyl-Maleinimide, Acrylsäure, Methacrylsäure, Fumarsäure, Itaconsäure oder deren Amide.

Die erfindungsgemäß geeigneten ABS-Polymerisate B weisen einen Kautschukgehalt von 20 bis 50 Gew.-%, vorzugsweise von 22,5 bis 45 Gew.-% und besonders bevorzugt von 25 bis 40 Gew.-% auf, die mittleren Teilchendurchmesser betragen 80 bis 660 nm, vorzugsweise 150 bis 400 nm und besonders bevorzugt 250 bis 350 nm.

Außerdem besitzen die Pfropf-Polymerisate B vorzugsweise einen Pfropfgrad von 0,2 bis 1 (vergl. M. Hoffmann, H. Krömer, R. Kuhn in "Polymeranalytik I", Georg Thieme Verlag Stuttgart 1977) und einen Gelgehalt von 30 bis 50 Gew.-% (gemessen in Methylethylketon).

Neben der erfindungsgemäßen Komponente B können zusätzlich auch übliche ABS-Polymerisate zugesetzt werden (vergl. z.B. EP-A 345 522 oder 640 655).

Die Formmasse kann neben den erfindungsgemäßen Komponenten A und B weitere Komponenten enthalten, die im folgenden beispielhaft beschrieben werden. Die Mengenangaben beziehen sich jeweils auf die gesamte Formmasse.

Als weitere Thermoplaste können Vinyl(co)polymerisate (Komponente C.1) und/oder Polyalkylenterephthalate (Komponente C.2) in einer Menge von jeweils bis zu 30 Gew.-%, vorzugsweise bis zu 20 Gew.-% eingesetzt werden. Die Summe aller Komponenten addiert sich zu 100 %.

### Komponente C.1)

Erfindungsgemäß einsetzbare Vinyl-(Co)Polymerisate gemäß Komponente C.1) sind harzartig, thermoplastisch und kautschukfrei. Sie sind solche aus wenigstens einem Monomeren aus der Reihe Styrol, α-Methylstyrol, kernalkyl-substituiertem Styrol, C₁-C₈-Alkylacrylat, C₁-C₈-Alkylmethacrylat (Komponente C.1.1) mit wenigstens einem Monomeren aus der Reihe Acrylnitril, Methacrylnitril, C₁-C₈-Alkylmethacrylat, C₁-C₈-Alkylacrylat, Maleinsäureanhydrid und/oder N-substituiertem Maleinimid (Komponente C.1.2).

C₁-C₈-Alkylacrylate bzw. C₁-C₈-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylester wird Methacrylsäuremethylester genannt.

Thermoplastische Copolymerisate mit einer Zusammensetzung gemäß Komponente C.1) können bei der Pfropfpolymerisation zur Herstellung der Komponente B) als Nebenprodukte entstehen, besonders dann, wenn große Mengen Monomere auf kleine Mengen Kautschuk gepfropft werden. Die erfindungsgemäß einzusetzende Menge an Copolymerisat C.1) bezieht diese Nebenprodukte der Pfropfpolymerisation nicht mit ein.

Die thermoplastischen Copolymerisate C.1) enthalten 50 bis 95 Gew.-%, vorzugsweise 60 bis 90 Gew.-% Komponente C.1.1) und 5 bis 50 Gew.-%, vorzugsweise 10 bis 40 Gew.-%, Komponente C.1.2).

Besonders bevorzugte Copolymerisate C.1) sind solche aus Styrol, mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente C.1) sind bekannt und lassen sich durch radikalische Polymerisation, insbesondere durch Emulsions-, Suspensions-, Lösungs- oder Massepolymerisation herstellen. Die Copolymerisate gemäß Komponente C.1) besitzen vorzugsweise Molekulargewichte (Gewichtsmittel, ermittelt durch Lichtstreuung oder Sedimentation) zwischen 15 000 und 200 000.

Besonders bevorzugte erfindungsgemäße Copolymerisate C.1) sind auch statistisch aufgebaute Copolymerisate aus Styrol, Maleinsäureanhydrid und/oder N-substituiertem Maleinimid, die durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten, statistisch aufgebauten Styrol/Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel n) der erfindungsgemäß geeigneten, statistisch aufgebauten Styrol/Maleinsäureanhydrid-Copolymeren gemäß Komponente C.1) können in weiten Bereichen variieren. Besonders bevorzugt ist der Bereich von 60 000 bis 200 000.

Bevorzugt ist für diese Produkte eine Grenzviskosität von 0,3 bis 0,9 dl/g (gemessen in Dimethylformamid bei 25°C).

Anstelle von Styrol können die Vinylcopolymerisate C.1) auch kernsubstituierte Styrole wie Vinyltoluole, 2,4-Dimethylstyrol und andere halogenfreie substituierte Styrole wie α-Methylstyrol enthalten.

### Komponente C.2)

Die Polyalkylenterephthalate der Komponente C.2) sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew.-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethyihexandiol-1,3, 2,2-Diethylpropandiol-1,3, Hexandiol-2,5, 1,4-Di-(β-hydroxy-ethoxy)-benzol, 2,2-Bis-(4-hydroxycyclohexyl)-propan, 2,4-Dihydroxy-1,1,3,3-tetra-methyl-cyclobutan, 2,2-Bis-(4-β-hydroxyethoxy-pbenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichtorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die erfindungsgemäßen Formmassen können darüber hinaus noch die üblichen Additive wie Gleit- und Entformungsmittel, Nukleiermittel, Antistatika, Stabilisatoren, Farbstoffe, Pigmente, Flammschutzmittel und/oder Verstärkungsmaterialien enthalten.

Die erfindungsgemäßen Formmassen enthalten als Flammschutzmittel wenigstens eine organische Phosphorverbindung der Formel (III)

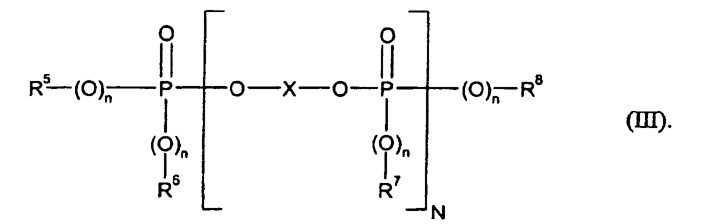

In der Formel bedeuten R⁵, R⁶, R⁷, R⁸, unabhängig voneinander, jeweils gegebenenfalls halogeniertes C₁-C₈-Alkyl, C₅-C₆-Cycloalkyl, C₆-C₁₀-Aryl oder C₇-C₁₂-Aralkyl, bevorzugt sind C₆-C₁₀-Aryl oder C₇-C₁₂-Aralkyl. Die aromatischen Gruppen R⁵, R⁶, R⁷ und R⁸ können ihrerseits mit Halogen, vorzugsweise Chlor oder Brom, und/oder Alkylgruppen, vorzugsweise C₁-C₄-Alkyl, insbesondere Methyl, Ethyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (III) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Bisphenol A, Resorcin, Hydrochinon, Biphenyl oder deren chlorierten oder bromierten Derivaten.

n in der Formel (III) kann, unabhängig voneinander, 0 oder 1 sein, vorzugsweise ist n gleich 1.

N steht für Werte von 0 bis 30, vorzugsweise für Werte von 0,3 bis 20, besonders bevorzugt 0,5 bis 10, insbesondere 0,5 bis 6.

Phosphorverbindungen, die unter die Formel (III) fallen, sind sowohl Monophosphorverbindungen als auch oligomere Phosphorverbindungen. Mischungen aus Mono- und oligomeren Phosphorverbindungen werden von der Formel (III) ebenfalls umfaßt.

Insbesondere werden als Monophosphorverbindung der Formel (III) organische Monophosphate wie Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid eingesetzt.

Mischungen aus oligomeren Phosphorverbindungen der Formel (III), vorzugsweise oligomeren Phosphaten der Formel (III), mit N-Werten von 0,5 bis 10, insbesondere 0,5 bis 6 oder Mischungen aus Mono- und oligomeren Phosphorverbindungen der Formel (III) werden als Flammschutzmittel besonders bevorzugt eingesetzt.

Vorzugsweise werden in der Mischung monomere und oligomere Phosphorverbindungen der Formel (III) so gewählt, daß eine synergistische Wirkung erzielt wird. Die Mischung besteht im allgemeinen zu 10 bis 90 Gew.-% aus oligomeren- und zu 90 bis 10 Gew.-% aus Monophosphorverbindungen, vorzugsweise Mono-Phosphatverbindungen der Formel (III). Vorzugsweise werden die Mono-Phophorverbindungen im Bereich von 12 bis 50, insbesondere von 14 bis 40, ganz besonders bevorzugt von 15 bis 40 Gew.-% mit der komplementären Menge an oligomeren Phosphorverbindungen gemischt.

Die genannten Phosphorverbindungen werden bevorzugt zusammen mit fluorierten Polyolefinen als Flammschutzmittelkombination in Mengen von 0,05 bis 5 Gew.-Teilen eingesetzt.

Die zum Einsatz kommenden fluorierten Polyolefine sind hochmolekular und besitzen Glasübergangstemperaturen von über -30°C, in der Regel von über 100°C, Fluorgehalte von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine eine Dichte von 1,2 bis 2,3 g/cm³. Bevorzugt fluorierte Polyolefine sind Polytetrafluorethylen, Polyvinylidenfluorid, Tetrafluorethylen, Hexafluorpropylen- und Ethylen/Tetrafluorethylen-Copolymerisate. Die fluorierten Polyolefine sind bekannt (vergl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 46, Nr. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,05 und 1 000 µm liegen.

Erfindungsgemäß besonders bevorzugte fluorierte Polyolefine sind

Tetrafluorethylenpolymerisate mit einem mittleren Teilchendurchmesser von 0,05 bis 20 µm, vorzugsweise 0,08 bis 10 µm, und eine Dichte von 1,2 bis 1,9 g/cm³.

Geeignete, in Pulverform einsetzbare fluorierte Polyolefine sind Tetrafluorethylenpolymerisate mit mittlerem Teilchendurchmesser von 100 bis 1 000 µm und Dichten von 2,0 g/cm³ bis 2,3 g/cm³.

Geeignete Tetrafluorethylenpolymerisat-Emulsionen sind handelsüblicdhe Produkte, die beispielsweise von der Firma DuPont als Teflon® 30 N angeboten werden.

Sie können in Form einer koagulierten Mischung von Emulsionen des Tetrafluorethylenpolymerisats mit Emulsionen der Pfropfpolymerisate eingesetzt werden.

Zur Herstellung einer koagulierten Mischung wird zuerst eine wäßrige Emulsion (Latex) eines Pfropfpolymerisates mit einer feinteiligen Emulsion eines Tetrafluoroethylenpolymerisates vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

In der Emulsionsmischung liegt das Gleichgewichtsverhältnis Pfropfpolymerisat zum Tetrafluorethylenpolymerisat bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Die erfindungsgemäßen Formmassen können darüberhinaus noch anorganische Verstärkungsmaterialien enthalten.

Als anorganische Verstärkungsmaterialien können Glasfasern, gegebenenfalls geschnitten oder gemahlen, Glasperlen, Glaskugeln, blättchenförmiges Verstärkungsmaterial, wie Kaolin, Talk, Glimmer, Mika, Kohlefasern oder deren Mischung eingesetzt werden. Vorzugsweise werden als Verstärkungsmaterial geschnittene oder gemahlene Glasfasern, vorzugsweise mit einer Länge von 1 bis 10 mm und einem Durchmesser von <20 µm, in einer Menge von bis zu 40 Gew.-Teilen eingesetzt; vorzugsweise sind die Glasfasern oberflächenbehandelt.

Die erfindungsgemäßen Formmassen können darüberhinaus noch feinstteilige, anorganische Pulver in einer Menge bis zu 50 Gew.-Teilen, vorzugsweise bis zu 20, insbesondere 0,5 bis 10 Gew.-Teilen, enthalten.

Feinstteilige anorganische Verbindungen bestehen aus Verbindungen eines oder mehrerer Metalle der 1. bis 5. Hauptgruppe oder 1. bis 8. Nebengruppe des Periodensystems, bevorzugt 2. bis 5. Hauptgruppe und 4. bis 8. Nebengruppe, besonders bevorzugt 3. bis 5. Hauptgruppe und 4. bis 8. Nebengruppe mit wenigstens einem Element ausgewählt aus der Gruppe bestehend aus Sauerstoff, Schwefel, Bor, Phosphor, Kohlenstoff, Stickstoff, Wasserstoff und Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, TiO₂, SnO₂, WC, ZnO, Al₂O₃, AlO(OH), ZrO₂, Sb₂O₃, SiO₂, Eisenoxide, NaSO₄, BaSO₄, Vanadianoxide, Zinkborat, Silicate wie Al-Silikate, Mg-Silikate, ein, zwei, dreidimensionale Silikate, Mischungen und dotierte Verbindungen sind ebenfalls venvendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Pfropfkautschuke mit Dispersionen, Suspensionen, Pasten oder Solen der feinstteiligen anorganischen Materialien dar.

Die erfindungsgemäßen Formmassen können zusätzlich zu den angegebenen Flammschutzmitteln 0,01 bis 10 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-hydroxid, anorganische Verbindungen wie Antimon-oxide, Barium-metaborat, Hydroxoantimonat, Zirkonoxid, Zirkon-hydroxid, Molybden-oxid, Ammoniummolybdat, Zink-borat, Ammonium-borat, Barium-metaborat und Zinnoxid sowie Siloxanverbindungen genannt.

Die erfindungsgemäßen Formmassen aus den einzelnen Komponenten und gegebenenfalls Additiven werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert. Bei Zugabe von anorganischen Verstärkungsmaterialien und/oder feinstteiligem Pulver eignet sich die Masterbatch-Technik besonders gut.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern durch Spritzguß verwendet. Beispiele für herstellbare Formkörper sind: Gehäuseteile jeder Art, z.B. für Haushaltsgeräte wie Saftpressen, Kaffeemaschinen, Mixer, für Büromaschinen, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Die erfindungsgemäßen thermoplastischen Formmassen eignen sich aufgrund sehr guter Verarbeitungseigenschaft und ihrer sehr guten mechanischen Eigenschaften, insbesondere ihrer herausragenden Eigenschaftskombination aus Kerbschlagzähigkeit und hohem Modul zur Herstellung von Formkörpern jeglicher Art, insbesondere solchen mit erhöhten Anforderungen an Bruchbeständigkeit. ?

Einsatzgebite liegen im Datentechnik-Sektor, wie beispielsweise Gehäuse-Teile für Monitore, Drucker und Kopierer. Hierbei handelt es sich um komplizierter gestaltete Formkörper mit relativ dünnen Wandstärken.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1.252, gemessen in CH₂Cl₂ als Lösungsmittel bei 25°C und in einer Konzentration von 0,5 g/100 ml.

### Komponente B

Das Pfropfpolymerisat B wird wie folgt hergestellt:

In einem 1001-Reaktor mit Ankerrührer (80 Upm) wird eine bei 40° bis 50°C unter Stickstoff hergestellte Lösung von 72 Gew.-Teilen eines Kautschuks (Poly-cis-butadien-co-block-styrol, 11 Gew.-% Styrol, Lösungsviskosität 27,5 mPa·s, 5% ige Lösung in Styrol) in 257 Gew.-Teilen Styrol, 120 Gew.-Teilen Acrylnitril und 229 Gew.-Teilen 2-Butanon zusammen mit 0,95 Gew.-Teilen tert.-Dodecylmercaptan, 0,15 Gew.-Teilen 2,5-Di-tert.-butylphenol und 7.6 Gew.-Teilen Paraffinöl vorgelegt. Nach dem Aufheizen auf 75°C wird eine Lösung von 0,57 Gew.-Teilen tert.-Butylperpivalat (60% ig in Kohlenwasserstoffgemisch) und 0,16 Gew.-Teilen tert.-Butylperoctoat in 18 Gew.-Teilen 2-Butanon zugesetzt und ca. 45 min bis zum Ende der Phaseninversion (erkennbar am Abfallen des Drehmoments) nachgerührt. Dann wird unter Nachdosierung von 0,19 Gew.-Teilen tert.-Dodecylmercaptan (gelöst in 37 Gew.-Teilen 2-Butanon) und unter Steigerung der Temperatur (1,5 h bei 84°C, 1 h bei 87°C, 4,5 h bei 90°C) bis zum Endumsatz polymerisiert, wonach 2 Gew.-Teile p-2,5-Di-tert.-butylphenol-propionsäureoctylester (Irganox 1076, Ciba-Geigy) (gelöst in 11 Gew.-Teilen 2-Butanon) als Stabilisator zugegeben werden.

Der Feststoffgehalt des Polymerisationssirups nach Ende der Reaktion beträgt 39 Gew.-%. Die Lösung wird dann auf einer ZSK-Labor-Eindampfschnecke bis 250°C Endtemperatur eingedampft und granuliert. Das Granulat enthält 27 Gew.-% Kautschuk, der Gelgehalt (gemessen in Aceton) beträgt 33 Gew.-%, die mittlere Teilchengröße der Kautschukphase (Gewichtsmittelwert) beträgt ca. 250 nm.

### Komponente C

Styrol/Acrylnitril-Copolymerisat mit einem Styrol/Acrylnitril-Verhältnis von 72:28 und einer Grenzviskosität von 0,55 dl(g (Messung in Dimethylformamid bei 20°C).

### Emulsionspfropfpolymerisat (Vergleich)

Pfropfpolymerisat von 45 Gew.-Teilen eines Copolymerisats aus Styrol und Acrylnitril im Verhältnis von 72:28 auf 55 Gew.-Teile teilchenförmigen vemetzten Polybutadienkautschuk (mittlerer Teilchendurchmesser d₅₀ = 0,4 µm), hergestellt durch Emulsionspolymerisation.

Triphenylphosphat (Disflamoll TP der Fa. Bayer, Leverkusen, Deutschland)

### Antidripping-Mittel

Tetrafluorethylenpolymerisat als koagulierte Mischung aus einer SAN-Pfropfpolymerisat-Emulsion gemäß o.g. Komponente in Wasser und einer Tetrafluorethylenpolymerisat-Emulsion in Wasser. Das Gewichtsverhältnis Pfropfpolymerisat zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung

Die Emulsion des Tetrafluorethylenpolymerisats (Teflon 30 N der Fa. DuPont) wird mit der Emulsion des Pfropfpolymerisats vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Entformungsmittel

### Pentaerythrittetrastearat

### Herstellung und Prüfung der erfindungsgemäßen Formmassen

Das Mischen aller Komponenten der Formmasse erfolgt auf einem 3-l-Innenkneter. Die Formkörper werden auf einer Spritzgießmaschine Typ Arburg 270 E bei 260°C hergestellt.

Die Bestimmung der Kerbschlagzähigkeit erfolgt nach Methode ISO 180 1A an Stäben der Abmessung 80 x 10 x 4 mm³ bei Raumtemperatur.

Die Bestimmung von aₙ erfolgt nach Methode DIN 53 453.

Die Bestimmung der Wärmeformbeständigkeit nach Vicat B erfolgt gemäß DIN 53 460 an Stäben der Abmessung 80 x 10 x 4 mm³.

Die Bestimmung des Zug-E-Moduls erfolgt nach ISO 527 / DIN 53 457.

Das Spannungsrißverhalten (ESC-Verhalten) wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrißverhalten wird über den Bruch in Abhängigkeit von der Vordehnung im Testmedium bei einer Expositionszeit von 5 Minuten beurteilt.

Der Biege-E-Modul erfolgt nach Methode DIN 53 457-B3 an Stäben der Abmessung 80 x 10 x 4 mm³.

**Tabelle 1:**

| Zusammensetzung und Eigenschaften der Polycarbonat-Pfropf-Formmassen | | | | |
|---|---|---|---|---|
| **Beispiel** | **1** **(Vergleich)** | **2** **(Vergleich)** | **3** **(Vergleich)** | **4** |
| **Komponenten (Gew.-Teile)** | | | | |
| A | 60,0 | 60,0 | 69,7 | 69,7 |
| B | - | 24,0 | - | 14,3 |
| Emulsionspfropfpolymerisat | 24,0 | - | 7,6 | - |
| (Vergleich) | | | | |
| C | 16,0 | 16,0 | 6,7 | - |
| Triphenylphosphat | - | - | 11,3 | 11,3 |
| Antidripping-Mittel | - | - | 4,2 | 4,2 |
| Entformungsmittel | | | 0,5 | 0,5 |

| **Eigenschaften:** | | | | |
|---|---|---|---|---|
| Vicat B₁₂₀ [°C] | 120 | 120 | 88 | 90 |
| Kerbschlagzähigkeit aₖ | 52 | 77 | 58 | 64 |
| [kJ/m²] | - | - | 12,0 | 42,1 |
| Fließnahtfestigkeit aₙ [kJ/m²] | 2050 | 2390 | 2650 | 2750 |
| Biege-E-Modul [N/mm²] | | | | |
| MVR 240°C / 5 kg [ml/10 min] | - | - | 13,7 | 14,3 |
| ESC-Verhalten Bruch bei [%] | 0,6 | 1,0 | 2,4 | * |

| | | | | |
|---|---|---|---|---|
| * nach 10 Minuten kein Bruch | | | | |

Die erfindungsgemäßen Formmassen zeigen trotz niedrigeren Kautschukgehaltes eine höhere Kerbschlagzähigkeit, bei höherem E-Modul und verbesserter Spannungs-rißbeständigkeit.

## Patentansprüche

1. Thermoplastische Formmassen enthaltend
A. 1 bis 99 Gew.-Teile aromatisches Polycarbonat oder Polyestercarbonat,
B. 1 bis 99 Gew.-Teile mindestens eines Pfropfpolymerisats mit einem Kautschukgehalt von 20 bis 50 Gew.-%, bezogen auf das Pfropfpolymerisat, und einem mittleren Teilchendurchmesser der Kautschukphase von 80 bis 600 nm, erhältlich durch Lösungspolymerisation und
wenigstens eine organische Phosphorverbindung der Formel (III) 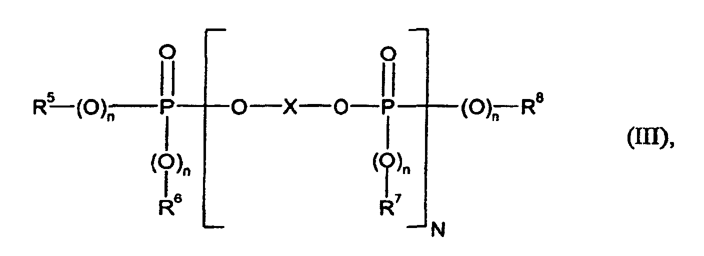 in welcher
R⁵, R⁶, R⁷, R⁸ unabhängig voneinander für jeweils gegebenenfalls halogeniertes C₁-C₈-Alkyl, C₅-C₆-Cycloalkyl, C₆-C₁₀-Aryl oder C₇-C₁₂-Aralkyl stehen,
X für einen ein- oder mehrkernigen aromatischen Rest mit 6 bis 30 C-Atomen steht,
n für 0 oder 1 steht und
N für Werte von 0 bis 30 steht.

2. Formmassen nach Anspruch 1, wobei das Pfropfpolymerisat B aus einem Monomerengemisch aus
B.1 90 bis 20 Gew.-Teilen aromatischer Monoalkenylverbindungen,
B.2 0 bis 50 Gew.-Teilen ethylenisch ungesättigter Nitrile,
B.3 0 bis 30 Gew.-Teilen weiterer, copolymerisierbarer Verbindungen,
in Gegenwart von
15 bis 50 Gew.-Teilen, pro 100 Gew.-Teile Monomeren B.1 bis B.3 eines löslichen, gelfreien Butadienpolymerisats oder Butadien/Styrol-Copolymerisats und in Gegenwart von
50 bis 200 Gew.-Teilen eines Lösungsmittels, pro 100 Gew.-Teile der Monomeren B.1 bis B.3 radikalisch bis zu einem Polymerengehalt der Gesamtmischung von 30 bis 70 Gew.-% unter Durchmischen und gegebenenfalls Nachdosieren von Regler und Initiator polymerisiert wird,
wobei das Lösungsmittel ein aliphatischer(s) (C₁-C₈) oder cycloaliphatischer(s) (C₅-C₆) Alkohol, Keton, Ether, Ester, Nitril (L 1) oder ein Gemisch von (L 1) mit einem aliphatischen, cycloaliphatischen oder aromatischen Kohlenwasserstoff (L 2) im Gewichtsverhältnis L 1:L 2 von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so daß das Pfropfpolymerisat 20 bis 50 Gew.-% Butadienpolymerisat enthält.

3. Formmassen gemäß den vorhergehenden Ansprüchen wobei die Komponente B durch Lösungspolymerisation unter Verwendung von mindestens einem Lösungsmittel ausgewählt aus aliphatischem oder cycloaliphatischem C₁-C₈-Alkohol, Keton, Ether, Ester, Nitril bzw. einem Gemisch aus mindestens einem der genannten Lösungsmittel mit einem aliphatischen oder cycloaliphatischen C₄-C₁₀-Kohlenwasserstoff und/oder aromatischen Kohlenwasserstoff hergestellt wird.

4. Formmassen nach einem der Ansprüche 1 bis 3, wobei das Pfropfpolymerisat B einen Kautschukgehalt von 22,5 bis 45 und einem mittleren Teilchendurchmesser der Kautschukphase von 150 bis 400 nm aufweist.

5. Formmassen gemäß der Ansprüche 1 bis 4, enthaltend weitere Komponenten ausgewählt aus mindestens einem der folgenden Komponenten ABS-Polymerisate, Vinyl(co)polymerisate, Polyalkylenterephthalate, Phosphor-Verbindungen, fluorierte Polyolefine, anorganische Verstärkungsmaterialen.

6. Formmassen gemäß der Ansprüche 1 bis 5, enthaltend Additive ausgewählt aus mindestens einem der Bestandteile von Gleit- und Entformungsmittel, Nukleiermittel, Antistatika, Stabilisatoren, Farbstoffe, Pigmente, Flammschutzmittel.

7. Formmassen gemäß einem der vorhergehenden Ansprüche, enthaltend eine feinstteilige Verbindung der 1. bis 5. Hauptgruppe oder der 1. bis 8. Nebengruppe des Periodensystems mit wenigstens einem Element ausgewählt aus der Gruppe bestehend aus Sauerstoff, Schwefel, Bor, Kohlenstoff, Phosphor, Stickstoff, Wasserstoff und Silicium.

8. Formmassen gemäß Anspruch 1, wobei N in Formel (III) Werte von 0,5 bis 10 aufweist.

9. Formmassen gemäß Anspruch 1, wobei N in Formel (III) Werte von 0,5 bis 6 aufweist.

10. Verwendung der Formmassen gemäß einem der vorhergehenden Ansprüche zur Herstellung von Formkörpern.

11. Formkörper hergestellt aus Formmassen gemäß Anspruch 1 bis 9.

## Claims

1. Thermoplastic moulding compositions containing
A 1 to 99 parts by weight of an aromatic polycarbonate or polyester carbonate
B 1 to 99 parts by weight of at least one graft polymer having a rubber content of from 20 to 50 wt.%, referred to the graft polymer, and a mean particle diameter of the rubber phase of 80 to 600 nm, obtainable by solution polymerisation, and
at least one organic phosphorus compound of the formula (III) 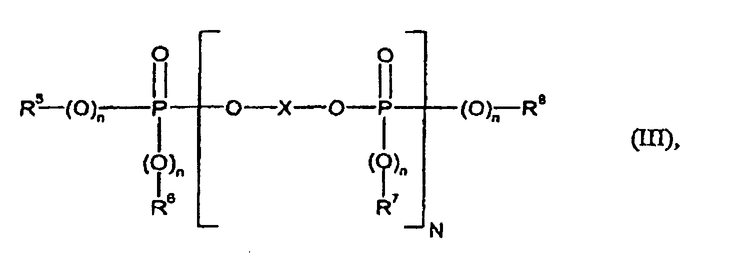 wherein
R⁵, R⁶, R⁷, R⁸, independently of one another, each denote optionally halogenated C₁-C₈-alkyl, C₅-C₆-cycloalkyl, C₆-C₁₀-aryl or C₇-C₁₂-aralkyl
X denotes a mononuclear or polynuclear aromatic radical having 6 to 30 C atoms,
n represents 0 or 1 and
N represents values from 0 to 30.

2. Moulding compositions according to claim 1, wherein the graft polymer B is free-radically polymerised from a monomer mixture consisting of
B.1 90 to 20 parts by weight of aromatic monoalkenyl compounds,
B.2 0 to 50 parts by weight of ethylenically unsaturated nitriles,
B.3 0 to 30 parts by weight of further, copolymerisable compounds,
in the presence of
15 to 50 parts by weight, per 100 parts by weight of monomers B.1 to B.3, of a soluble, gel-free butadiene polymer or butadiene-styrene copolymer and in the presence of
50 to 200 parts by weight of a solvent per 100 parts by weight of monomers B.1 to B.3, until the polymer content of the total mixture is 30 to 70 wt.%, with thorough mixing and optionally subsequent addition of regulator and initiator,
wherein the solvent is an aliphatic (C₁-C₈) or cycloaliphatic (C₅-C₆) alcohol, ketone, ether, ester, nitrile (solvent S 1) or a mixture of (S 1) with an aliphatic, cycloaliphatic or aromatic hydrocarbon (solvent S 2) in a weight ratio S 1:S 2 of 100:0 to 30:70, and the polymerisation is carried out until the polymer content of the total mixture is 30 to 70 wt.%, with thorough mixing and optionally subsequent addition of regulator and initiator, so that the graft polymer contains 20 to 50 wt.% of butadiene polymer.

3. Moulding compositions according to the preceding claims, wherein component B is prepared by solution polymerisation with the use of at least one solvent selected from an aliphatic or cycloaliphatic (C₁-C₈) alcohol, ketone, ether, ester, nitrile or a mixture of at least one of the abovementioned solvents with an aliphatic or cycloaliphatic C₄-C₁₀-hydrocarbon and/or aromatic hydrocarbon.

4. Moulding compositions according to one of claims 1 to 3, wherein the graft polymer B has a rubber content of 22.5 to 45 and a mean particle diameter of the rubber phase of 150 to 400 nm.

5. Moulding compositions according to claims 1 to 4, containing further components selected from at least one of the following components: ABS polymers, vinyl (co)polymers, polyalkylene terephthalates, phosphorus compounds, fluorinated polyolefins, inorganic reinforcing materials.

6. Moulding compositions according to claims 1 to 5, containing additives selected from at least one of the constituents comprising lubricants and mould release agents, nucleating agents, antistatic agents, stabilisers, dyes, pigments, flameproofing agents.

7. Moulding compositions according to one of the preceding claims, containing a very finely particulate compound of main group I to V or subgroup I to VIII of the Periodic System with at least one element selected from the group consisting of oxygen, sulfur, boron, carbon, phosphorus, nitrogen, hydrogen and silicon.

8. Moulding compositions according to claim 1, in which N in formula (III) has values of 0.5 to 10.

9. Moulding compositions according to claim 1, in which N in formula (III) has values of 0.5 to 6.

10. Use of the moulding compositions according to one of the preceding claims for the production of mouldings.

11. Mouldings produced from moulding compositions according to claims 1 to 9.

## Revendications

1. Matières à mouler thermoplastiques contenant
A. 1 à 99 parties en poids d'un polycarbonate ou polyester-carbonate aromatique,
B. 1 à 99 parties en poids d'au moins un polymère greffé à une teneur en caoutchouc de 20 à 50 % de son poids et un diamètre de particules moyen de la phase caoutchouc allant de 80 à 600 nm, obtenu par polymérisation en solution et
au moins un composé organique phosphoré de formule (III) 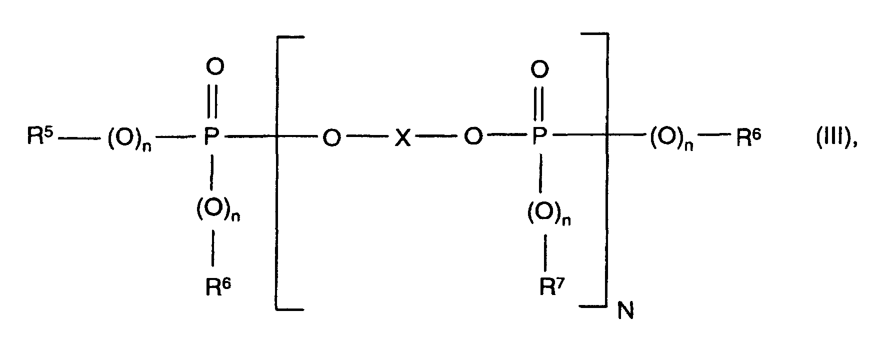 dans laquelle
R⁵, R⁶, R⁷ et R⁸ représentent chacun, indépendamment les uns des autres, un groupe alkyle en C₁-C₈, cycloalkyle en C₅-C₆, aryle en C₆-C₁₀ ou aralkyle en C₇-C₁₂, chacun d'eux pouvant être halogéné,
X représente un radical aromatique mono- ou poly-cyclique contenant 6 à 30 atomes de carbone,
n est égal à 0 ou 1 et
N a une valeur de 0 à 30.

2. Matières à mouler selon revendication 1, pour lesquelles le polymère greffé B a été obtenu par polymérisation d'un mélange de monomères consistant en
B.1 90 à 20 parties en poids de composés aromatiques monoalcényliques,
B.2 0 à 50 parties en poids de nitriles à insaturation éthylénique,
B.3 0 à 30 parties en poids d'autres composés copolymérisables
en présence de
15 à 50 parties en poids, pour 100 parties en poids des monomères B.1 à B.3, d'un polymère du butadiène ou d'un copolymère butadiène/styrène soluble, exempt de gel,
et en présence de
50 à 200 parties en poids d'un solvant, pour 100 parties en poids des monomères B.1 à B.3, par polymérisation radicalaire jusqu'à une teneur en polymère de 30 à 70 % du poids du mélange total, sous mélange soigné et le cas échéant avec addition de compléments de régulateur et d'inducteur,
le solvant consistant en un alcool, une cétone, un éther, un ester, un nitrile aliphatique en C₁-C₈ ou cycloaliphatique en C₅-C₆ (L 1) ou en un mélange de L 1 et d'un hydrocarbure aliphatique, cycloaliphatique ou aromatique (L 2) dans des proportions relatives en poids L 1/L 2 de 100 : 0 à 30 : 70, la polymérisation étant poursuivie jusqu'à une teneur en polymère de 30 à 70 % du poids du mélange total, avec mélange soigné et le cas échéant addition de compléments de régulateur et d'inducteur, le polymère greffé contenant 20 à 50 % en poids de polymère du butadiène.

3. Matières à mouler selon les revendications précédentes, pour lesquelles le composant B a été préparé par polymérisation en solution avec utilisation d'au moins un solvant choisi parmi les alcools, cétones, éthers, esters, nitriles aliphatiques ou cycloaliphatiques en C₁-C₈ ou les mélanges d'au moins un des solvants mentionnés avec un hydrocarbure aliphatique ou cycloaliphatique en C₄-C₁₀ et/ou un hydrocarbure aromatique.

4. Matières à mouler selon l'une des revendications 1 à 3, dans lesquelles le polymère greffé B a une teneur en caoutchouc de 22,5 à 45 avec, pour la phase caoutchouc, un diamètre de particule moyen de 150 à 400 nm.

5. Matières à mouler selon les revendications 1 à 4 contenant d'autres composants choisis parmi au moins un des composants suivants : polymères ABS, (co)polymères vinyliques, téréphtalates de polyalkylène, dérivés phosphorés, polyoléfines fluorées, agents renforçants minéraux.

6. Matières à mouler selon les revendications 1 à 5, contenant des additifs choisis parmi au moins un des constituants suivants : agents lubrifiants et de démoulage, agents de nucléation, agents antistatiques, stabilisants, colorants, pigments, agents ignifugeants.

7. Matières à mouler selon l'une des revendications qui précèdent, contenant, à l'état de particules très fines, un composé du premier au cinquième groupe principal ou du premier au huitième sous-groupe de la Classification Périodique avec au moins un élément choisi dans le groupe consistant en l'oxygène, le soufre, le bore, le carbone, le phosphore, l'azote, l'hydrogène et le silicium.

8. Matières à mouler selon revendication 1, pour lesquelles le symbole N de la formule (III) a des valeurs de 0,5 à 10.

9. Matières à mouler selon revendication 1, pour lesquelles le symbole N de la formule (III) a des valeurs de 0,5 à 6.

10. Utilisation des matières à mouler selon l'une des revendications qui précèdent pour la fabrication d'objets moulés.

11. Objets moulés fabriqués à partir des matières à mouler selon les revendications 1 à 9.
